Europäisches Patentamt

European Patent Office

Office européen des brevets

(11) Publication number: **0 084 206**
**A1**

# EUROPEAN PATENT APPLICATION

(21) Application number: 82300269.6

(22) Date of filing: 19.01.82

(51) Int. Cl.³: **A 47 J 37/12**

(43) Date of publication of application:
27.07.83 Bulletin 83/30

(84) Designated Contracting States:
AT BE CH DE FR IT LI LU NL SE

(71) Applicant: Williams, Ronald Harry
52A Greenland Road
Auckland(NZ)

(71) Applicant: Elliott, Mason Thomas
3/77 Sylvia Road
Auckland(NZ)

(71) Applicant: Mirmikidis, Alexander Peter
63 Florence Road
Nedlands Perth(AU)

(72) Inventor: Williams, Ronald Harry
52A Greenland Road
Auckland(NZ)

(72) Inventor: Elliott, Mason Thomas
3/77 Sylvia Road
Auckland(NZ)

(72) Inventor: Moss, Leonard Samuel
10 Apunya Close
Brisbane Queensland(AU)

(74) Representative: Ayers, Martyn Lewis Stanley et al,
J.A. KEMP & CO. 14 South Square Gray's Inn
London, WC1R 5EU(GB)

(54) Improvement in or relating to cooking apparatus.

(57) A cooking apparatus comprises a hopper 7 for storing raw or precooked foodstuffs; metering means 8 constructed and arranged to meter by weight a predetermined quantity of foodstuffs received from said hopper; a vibratory conveyor 9 operable to convey foodstuffs from said hopper to said metering means; a cooking medium; and a cooking container 10 displaceable between a first position in which said container receives foodstuffs from the metering means, a second position in which the foodstuffs in said cooking container are placed in said cooking medium and a third position in which the foodstuffs may be dispensed. The metering means includes a counterbalanced arm having an operable receiver on one side of the pivot axis thereof to receive said foodstuffs.

*Fig.1.*

DESCRIPTION

TITLE: <u>IMPROVEMENTS IN OR RELATING TO COOKING APPARATUS</u>

This invention relates to cooking apparatus and in particular, though not necessarily solely, to apparatus for cooking and dispensing potato chips also known as French fries.

It is an object of the present invention to provide cooking apparatus which will at least provide the public with a useful choice.

Accordingly, the invention consists in apparatus for cooking foodstuffs including a hopper for storing raw or pre-cooked foodstuffs; metering means constructed and arranged to meter a predetermined quantity of foodstuffs received from said hopper; vibratory conveying means operable to convey foodstuffs from said hopper to said metering means; a cooking medium; and a cooking container displaceable between a first position in which said container receives foodstuffs from said metering means, a second position in which the foodstuffs in said cooking container are placed in said cooking medium; and a third position in which the foodstuffs may be dispensed from said cooking container.

To those skilled in the art to which this invention relates, many changes in construction and widely differing embodiments and applications of the invention will suggest themselves without departing from the scope of the invention as defined in the appended claims. The disclosures and the descriptions herein are purely illustrative and it is not our intention to limit the scope of the invention by those disclosures and descriptions, or otherwise, than by the terms of the appended claims.

One preferred form of the invention will now be described with reference to the accompanying drawings in which:

Fig. 1 shows a schematic front elevational view of apparatus according to the invention with the front cover of the apparatus removed;

Fig. 2 shows an enlarged partially cut-away view of part of the apparatus shown in Fig. 1;

Fig. 3 shows an end elevational view of a cooking basket and its associated mountings used in cooking apparatus according to the invention;

Fig. 4 shows a perspective view of cup dispensing means suitable for use in cooking apparatus according to the invention;

Fig. 5 shows an upper plan view of the apparatus depicted in Fig. 4;

Fig. 6 shows a side elevational view of a spiral wheel incorporated in the cup dispensing apparatus depicted in Figs 4 and 5;

Fig. 7 shows a plan view of a cup locating and delivery apparatus suitable for use in cooking apparatus according to the invention;

Fig. 8 shows an enlarged view of part of the apparatus depicted in Fig. 7;

Fig. 9 shows an elevational view of the drive arrangement for the cup locating arm depicted in Figs. 7 and 8;

Fig. 10 shows a cross-sectional elevational view of a hopper used in the cooking apparatus according to the invention; and

Fig. 11 shows a top plan view of the apparatus depicted in Fig. 10.

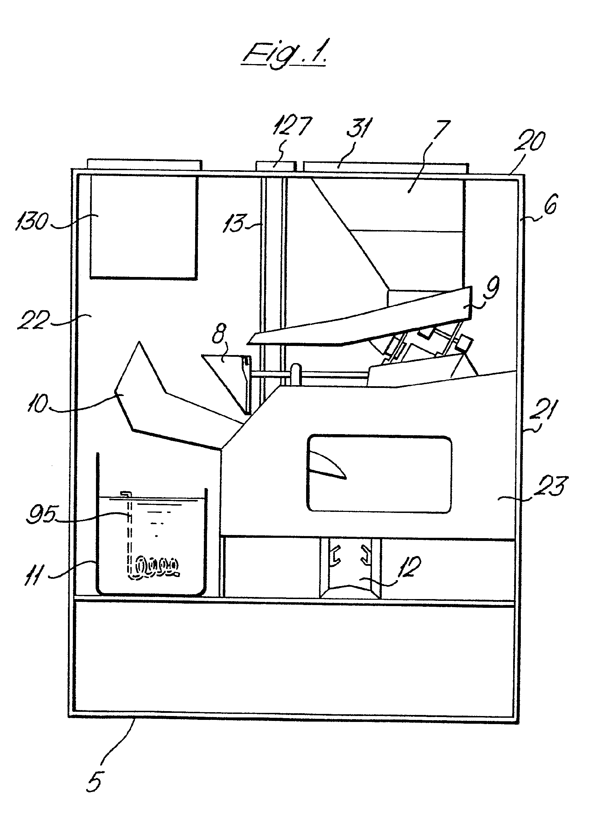

Referring to the drawings, and in particular Fig. 1, according to the invention there is provided cooking apparatus generally indicated by reference numeral 5 comprising a cabinet 6 in which is housed a hopper 7 for storing raw or pre-cooked chips, metering means 8 for metering a predetermined quantity of chips received from the hopper 7, vibratory conveying means 9 for delivering chips from the hopper 7 to the metering means 8, and a cooking container 10 which is displaceable between a first position in which it receives a metered quantity of chips from the metering means 8, a second position in which it is immersed in a cooking medium such as vat 11 containing hot oil, and a third position in which it dispenses the cooked chips to a delivery station 12. The apparatus preferably further includes cup dispensing means, part of which is indicated by reference numeral 13 and means, which will be described hereinafter, for moving the cup from the dispensing apparatus to the delivery station 12.

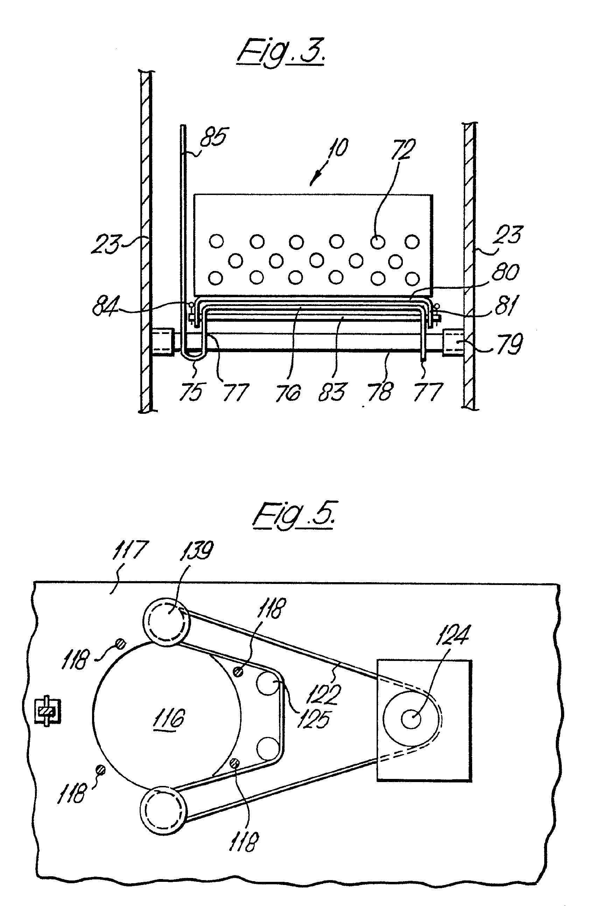

As shown, the cabinet 6 is a rectangular structure having upper surface 20, side walls 21 and rear wall 22. Mounted within the cabinet is a sub chasis 23 comprising front and rear plates 24, (Fig. 3) which serve to mount the vibratory conveying means 9, the metering means 8 and the cooking container 10.

As can be seen from Fig. 1, the hopper 7 is mounted in an upper corner of the cabinet 6 and passes through the top surface 20 of the cabinet. A cover 31 covers the upper end of the hopper 7 and this cover may be displaced to an open position to allow raw or pre-cooked chips to be loaded into the hopper.

Referring to Figs 10 and 11, the hopper has a substantially vertical rear wall 32, a downwardly and inwardly sloping front wall 33 and a pair of side walls 34, the lower ends of which taper inwardly to, in combination with rear wall 32 and front wall 33, define a substantially rectangular delivery aperture 35 which, as can be seen from Fig. 1, is mounted above the vibratory conveying means so as to deliver chips thereto under gravity.

To prevent clogging of the chips in or about the delivery aperture 35, a baffle plate 36 is provided which is mounted on a pivot rod 37 fixed between the side walls 34. When the hopper is completely empty the baffle 36 assumes the position shown in solid outline in Figs 10 and 11 under gravity. As the hopper is filled chips are stored on either side of the baffle 36 and the position of the baffle plate does not move substantially. As the hopper empties however chips to the right hand side of the baffle plate, as shown, pass through the delivery aperture 35, the effect of the baffle plate being to provide a smaller substantially rectangular chamber within the hopper 7. Once all the chips to the right hand side of the baffle plate have passed through the delivery aperture 35, th weight of the chips to the left hand side of the baffle plate displaces the same to the position shown in dotted outline in the figures thus providing a further substantially parallel walled chamber from which chips are dispensed through the outlet aperture 35.

We have found that the provision of the baffle plate 36 which in operation divides the hopper into two substantially parallel chambers avoids clogging of the chips in or about the exit aperture 35.

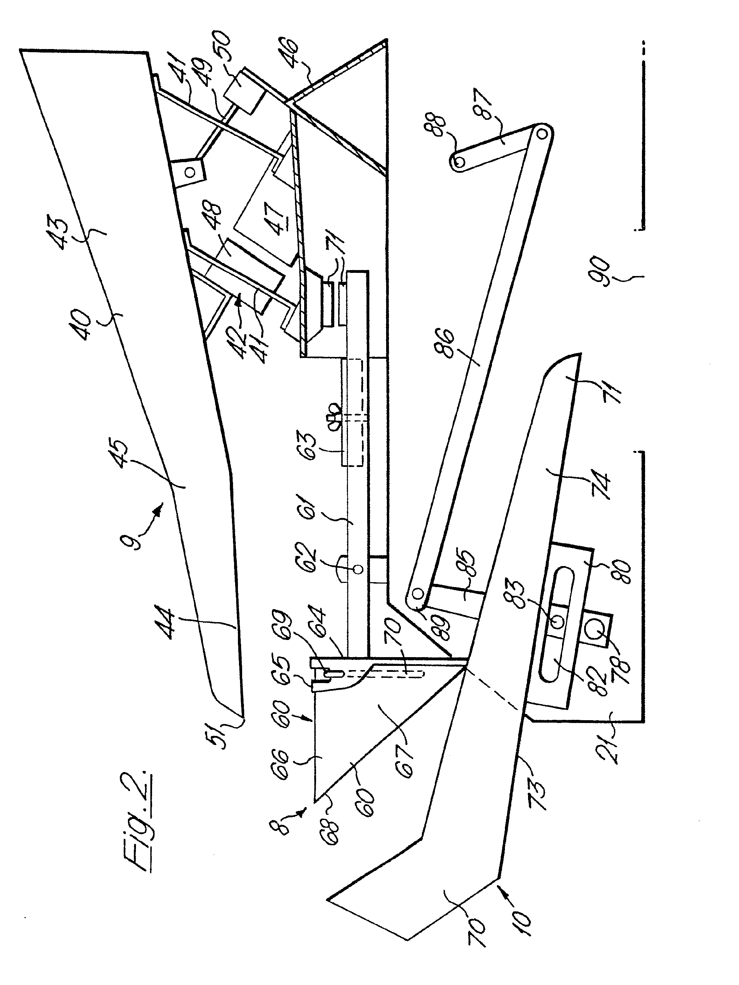

Referring now to Fig. 2, the vibratory conveying means generally designated 9, comprises a vibrating ramp member 40 mounted on the chassis 21 preferably on leaf springs 41. Means 42 are provided to displace the ramp 40 with respect to the chassis 21.

The ramp member 40 is in the form of a chute having a rear section 43, the base of which is mounted at an angle of about $15^{o}$ to the horizontal; and a front section 44, the base of which is mounted substantially horizontally. Side walls 45 extend along either edge of the base parts of sections 43 and 44.

As can be seen four metallic leaf springs 41 are mounted on the underside of the base of section 43 of the ramp 40, the lower ends of the leaf springs 41 being mounted on a sub-frame 46 affixed to the upper edges of the side plates 23 of the chassis 21.

The means 42 to displace the ramp 40 preferably comprises an electro magnet 47 and co-acting ferro-magnetic plates 48, the magnet 47 being mounted on the sub-frame 46 and the ferro-magnetic plates 48 being mounted on the underside of the ramp 40. The magnet 47 is energised using a pulsating D.C. power source which, of course, has the effect of imparting a vibratory motion to the ramp 40.

The frequency of the pulsating signal fed to the magnet 47 is preferably adjusted to equate substantially to the mechanical resonant frequency of the springs 41 and the ramp 40 to maximise the vibratory action for a given electrical signal.

The vibratory conveying means 9 preferably further includes means to modulate the amplitude of vibration of the ramp 40 and to this end a small magnet (not shown) is mounted on the end of rod 49 which projects from the underside of the ramp 40, the magnet moving axially within coil 50, mounted on sub-frame 46, as the ramp 40 vibrates with respect to the chassis 21. The axial displacement of the magnet within the coil 50 generates an electric signal which is processed so as to modify the mark - space ratio and thereby increase or decrease the power supplied to magnet 47. This in turn ensures that regardless of the load placed on the ramp 40, the amplitude of vibration is always the same.

The chips conveyed by the vibratory conveying means 9 are delivered into the metering means 8 which is positioned beneath the forward end 51 of the ramp 40. As shown the metering means 8 is constructed and arranged to meter a predetermined weight of chips and to this end comprises a chip receiver 60 mounted on arm 61 which is pivotally mounted to the chassis 21 at 62. A weight 63 counterbalances the receiver 60, the position of the weight 63 being adjustable to allow varying weights of chips to be metered.

The chip receiver 60 comprises a rear wall 64 which is mounted on the arm 61, a pair of mounting brackets 65 being provided on opposed side edges of the rear wall 64 to provide mounting means for the receiver body 66 which comprises a pair of side walls 67 and a front wall 68. A mounting rod 69 passes between the side walls 67 and engages in slots provided in the brackets 65. It will be appreciated from the figures that the receiver body 66 is mounted adjacent its upper edge and accordingly the receiver falls to a closed position under its own weight. A vertically downward extension 70 of the mounting rod 69 is provided to allow the receiver to be opened in a manner which will be described hereinafter.

Means are preferably provided to switch off the vibratory conveying means 9 once a predetermined weight of chips has been delivered into the metering means 8 and to this end a pair of switch contacts 71 are provided, one contact being on the end of the arm 61 and the other being mounted on subframe 46 in a position contactable by the other contact. When the predetermined quantity of chips have been received by the receiver 60 the arm 61 is pivotted about pivot 62 so that the switch contacts 71 engage and cut off the power supply to the magnet 47.

From the metering means 8, the metered quantity of chips is delivered into a cooking container 10. As can be better seen from Fig. 3 the cooking container 10 is preferably pivotally suspended between side walls 23 of the chassis 21.

Turning again to Fig. 2 the cooking container 10 includes a cooking part 70 integrally formed with a delivery part 71. The cooking part 70 is preferably basket shaped and includes apertures 72 (Fig. 3) in the walls thereof to allow the cooking medium to pass into the basket shaped cooking part 70 and thereby cook the chips therein. A planar base surface 73 extends from the cooking part 70 to the delivery part 71 which merely comprises a delivery chute. Side walls 74 in combination with the base 73 define the delivery chute.

The cooking container is slidably mounted for reasons which will be hereinafter described. To this end a first bracket 75 is provided which is formed to the cross sectional shape shown in Fig. 3 and includes a transverse plate member 76 having downwardly extending legs 77 at either side thereof, the legs 77 mounting pivot rod 78 which is fixed thereto. Pivot rod 78 in turn locates in sockets 79 fixed to the inner faces of walls 23 to support the assembly within the chassis 21. Fixed to the underside of the cooking container is a U-shaped bracket 80 the two flanges 81 of the U including longitudinal slots 82. A further pin 83, located in the legs 77 of the bracket 75, extends through slots 82 thus allowing the cooking container 70 with affixed bracket 80 to slide with respect to the bracket 75. Locking pins 84 retain the rod 83 with respect to the bracket 80.

Extending upwardly from the inner end of pivot rod 78 is an actuating arm 85. As can be seen from Fig. 2 this arm 85 is pivotally connected to link arm 86 which in turn is pivotally mounted to one end of crank arm 87. The crank arm 87 is rotatably driven by a primary drive motor (not shown).

The cooking container is shown in the rest position in Fig. 2. As the crank arm 87 is rotated in a clockwise position the cooking container and slide assembly is rotated in an anti-clockwise position about pivot rod 78. When the arm 87 is in the horizontal position to the left of pivot 88 the cooking part 70 is substantially lower than the delivery part 71. This defines the cooking position and in this position the right hand end of slot 80 is in contact with the retaining pin 83.

As the cooking container moves from the rest position to the cooking position a projection 89 on the forward end of link rod 86 engages extension 70 of the mounting rod 69 n the metering means 8 thus opening the chip receiver 60 and allowing the contents thereof to pass under gravity into the cooking part 70 of the cooking container, the geometry of the apparatus being such that when the chip receiver 60 is opened the cooking section 70 of the means 10 is vertically lower than the delivery section 71.

Once the cooking cycle has been completed the crank 87 rotates further drawing the cooking container 10 back through the rest position shown until the crank 87 is in a substantially horizontal position to the right of pivot 88. In this position the delivery section 71 is somewhat lower than the position depicted in Fig. 2 and considerably lower than the cooking section 70 thus allowing the cooked chips to pass under gravity through aperture 90 and to the delivery station 12. Further, as the cooking container 10 moves to the dispensing position the bracket 80 slides with respect to the bracket 75 until the pin 83 engages the left hand ends of slots 82. The jerk thus imparted to the container 10 ensures that any chips caught up in the interior of the cooking container 10 are dislodged.

When in the cooking position the cooking section 70 of the cooking container 10 is immersed in hot oil contained within the vat 11, the oil being heated by means of heating coil 95.

During the cooking operation a paper or plastics cup is placed into the dispensing station 12 and this is preferably effected by means of the apparatus depicted in Fig.s 7 to 9.

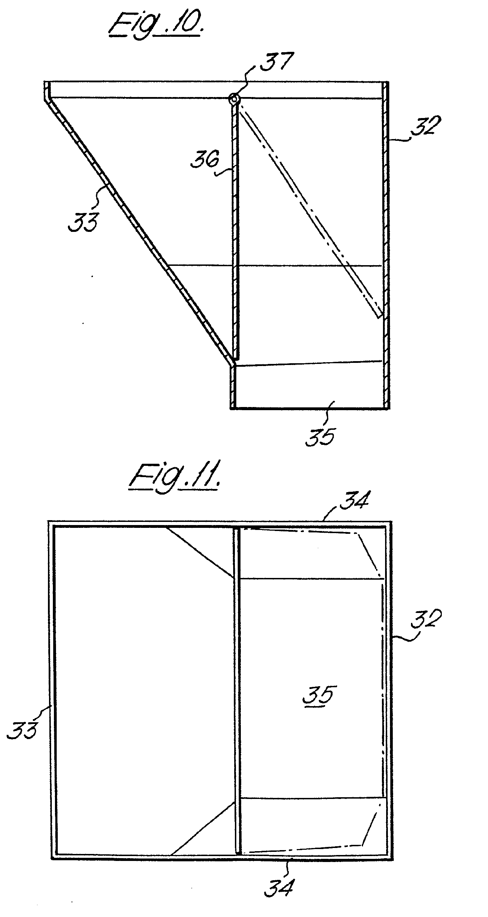

Referring to Figs 7 to 9 a cup holding brack100 is provided mounted on the end of arm 101 which is pivotally mounted beneath motor mount 102 on bracket 103, the pivot point being indicated by reference numeral 104 in Fig. 8. A motor 105 is mounted on mount 102 as can be seen from Fig. 9, the drive shaft 106 of the motor projecting down beneath the upper surface of mount 102 and in turn mounting crank arm 107. It will further be seen that the axis of shaft 106 is offset from the pivot axis 104 of arm 101.

Provided longitudinally of arm 101 and adjacent the rear edge thereof is a slot 108, the axis of the slot lying on the axis of pivot 104 of the arm 101. Projecting downwardly from crank arm 107 so as to engage in slot 108 is a drive peg 109.

It will be appreciated that as the arm 107 is rotated in a clockwise direction by motor 105 the arm 101 is rotated in a clockwise position. Further, since the sum of the distance between pivots 104 and 106 and the length of crank arm 107 is less than the distance between pivot 104 and the remote end of slot 108 the crank 107 passes through the over centre position when pivotting the arm 101 between the position shown in solid outline in Figs 7 and 8 and a position perpendicular thereto shown in dotted outline. It will further be appreciated that when the arm 101 and crank 107 are in the position shown in dotted outline in Figs 7 and 8, further rotation of the crank 107 will rotate the arm 101 in an anti-clockwise direction back toward the position shown in solid outline.

The motor mount 102 and arm mount bracket 103 are positioned within the cabinet so that when the arm 101 is in the position shown in solid outline the cup holder 100 is in the dispensing station 12 beneath the delivery end of the cooking container 10 and when the arm 101 is in the position as shown in dotted outline the cup holder 100 is vertically beneath cup dispensing means which will now be described.

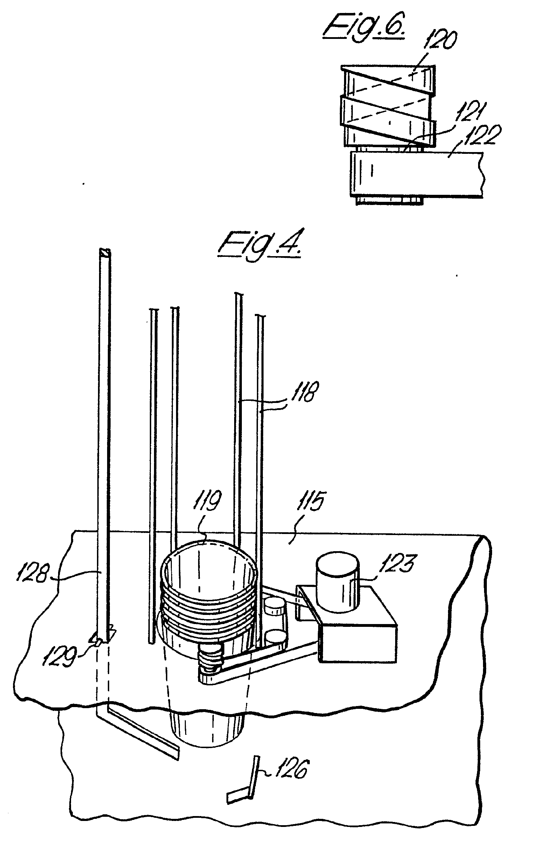

Referring now to Figs 4 to 6, cup dispensing apparatus generally designated 115 is preferably provided to place a cup into the cup holder 100 when the arm 101 and cup holder 100 are in the positions shown in dotted outline in Figs 7 and 8.

To this end a delivery aperture 116 is provided in a ledge 117 extending from the rear wall of the cabinet 6 through which paper or plastic cups of the required size may be dispensed. A plurality of rods 118 are positioned about the aperture 116 to retain a stack 119 of cups in the proper relationship to the aperture 116.

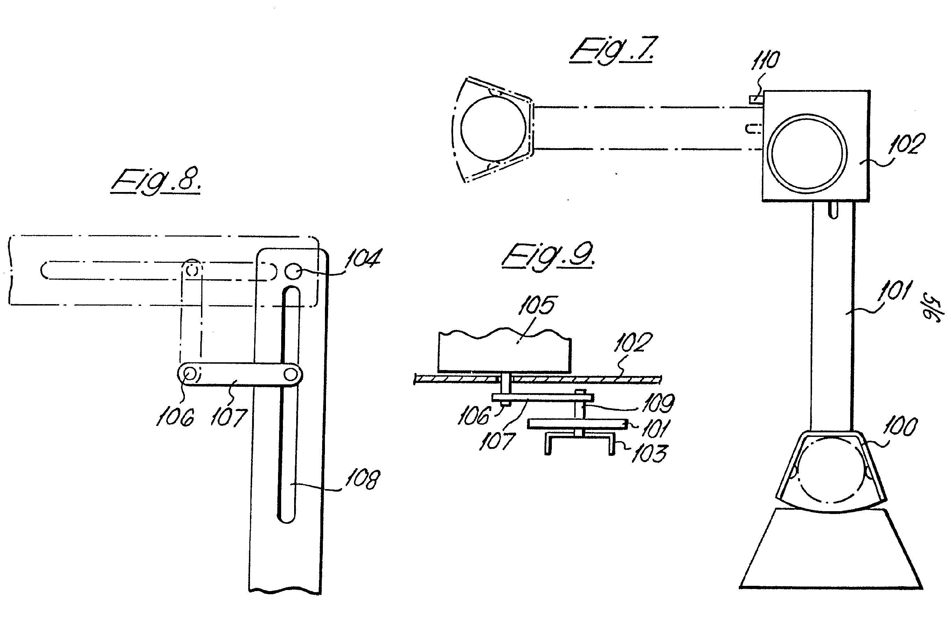

Mounted on opposed points about the aperture 116 are a pair of spiralled wheels 119, one of which is shown in greater detail in Fig. 6. As can be seen the wheels 119 include a downwardly spiralling cup engaging surface 120 and a drive section 121 of lesser diameter about which a drive belt 122 is passed so as to impart rotation to the wheels 120.

As can be seen more particularly from Fig. 5 the drive belt 122 is an endless member of the cogged type driven from motor 123. A pulley 124 is mounted on the drive shaft of the motor 123 and the belt passes about both spiralled separating wheels 120 as well as about the drive pulley 124. A pair of idler wheels 125 are situated between the separating wheels 119 to direct the belt away from the aperture 116.

As can be seen from Fig. 4 the rim of the lowermost cup in the stack rests on the upper edge of the separating wheels 119 and accordingly as the wheels are rotated the rim is captured in the downward spiral and is thus separated from the remaining cups in the stack and falls through aperture 116. As the cup passes through aperture 116 a flap switch 126 is displaced which cuts current to the drive motor 123 until the next delivery cycle.

Returning now to Fig. 1 the upper end of rods 118 are engaged with the top panel 20 of the cabinet and a removable cover 127 is provided to allow cups to be inserted into the dispensing apparatus 125. To prevent cups from falling straight through the dispensing apparatus during the filling operation a displaceable stop bar 128 is provided which is pivotally mounted at 129 to the ledge 117 and, when cover 127 is removed, rotates in a counterclockwise direction to project over the space beneath the aperture 116. When the cover 127 is again replaced the stop bar 128 is rotated in a clockwise direction so as to not project over the area of the dispensing aperture.

Finally, the apparatus preferably further includes a suitable fan and filter enclosed in housing 130 to draw fumes from the cooking operation out of the cabinet enclosure and as can be seen the housing 130 is fixed to the top panel 20 of the cabinet 6.

The apparatus as hereinabove described is provided with suitable control means which does not form part of the invention. The form of the control means would however be readily obvious to a person skilled in the art. The form which the control means takes will be obvious to the following description of the operation of the apparatus.

The initial position of the apparatus is substantially as shown in Figs 1 and 2 with the cooking container 10 shown in the rest position.

The commencement of the operating cycle is initiated by the insertion of coins into the coin feed mechanism (not shown) which activates the machine and in particular activates the power supply to the magnet 47 and thereby imparts a vibratory motion to the conveyor 9.

The vibratory conveying means 9 receives chips from the hopper 7 under gravity and conveys the chips to the forward end thereof from where the chips fall under gravity into the receiver 60 of the metering means 8. When a predetermined weight of chips have been received in the receiver 60, the arm 61 pivots in a counterclockwise direction about pivot 62 closing the switch contacts 71 thus cutting current to the magnets 47.

When the receiver 60 is full of chips and the current to magnet 47 stopped the motor driving crank arm 87 is activated rotating the crank arm 87 in a clockwise direction. As the link bar 86 is displaced forward the cam surface 89 thereon engages the downward extending rod 70 while simultaneously rotating the cooking container 10 in a counterclockwise direction. The action of the cam 89 on the rod 70 opens the receiver 60 which releases the quantity of chips into the cooking section 70 of the basket. Further rotation of the crank 87 displaces the cooking container still further until the crank arm 87 reaches a substantially horizontal position to the left of the pivot 88 whereupon a further switch is contacted cutting power to the drive motor and activating a timer. In this position the cooking container 10 with attached bracket 80 slides to the lowermost position defined by the contact of bar 83 on the right hand end of slots 82 and in this position the cooking section 70 of the container 10 is fully immersed in oil in vat 11.

At the end of the cooking cycle, determined by the timer, the motor driving crank arm 87 is again activated, driving crank arm 87 further clockwise and thus drawing link bar 86 rearward and in so doing rotating the cooking container 10 in a clockwise direction until the crank arm 87 is again horizontal but to the right of pivot 88 and in this position a further switch is activated to stop the motor and activate a second timing cycle. In this position also the delivery end 71 of the cooking container is at its lowermost position and the chips may be dispensed under gravity to the dispensing station. Dispensing of the chips is aided by the cooking container 10 sliding over the bracket 75 until the stop bar 83 contacts the left hand ends of slots 82.

During the cooking operation the motor 105 is activated to rotate arm 101 from the straight ahead position shown in solid outline in Figs 7 and 8 to the cup receiving position shown in dotted outlines. When the arm 101 reaches the position shown in dotted outlines a further switch 110 is activated to cut the current to motor 105 and energise motor 123 which imparts drive to the spiralled separating wheels 119 to thereby dispense a cup into the cup holder 100 now positioned beneath aperture 116. After switch 126 has been activated indicating that a cup has been released into holder 100 motor 105 is again activated to return the arm 101 to the straight ahead position beneath the dispensing station.

After the chips have been dispensed from the cooking container 10 into the cup retained in cup holder 100 the operator may remove the filled cup through a dispensing slide (not shown) provided in the front cover of the cabinet (not shown).

From the aforegoing it will be appreciate that the present invention provides means which meters a predetermined quantity of raw or precooked chips, displaces the metered quantity into a cooking medium, cooks the chips and then dispenses the metered and cooked chips into a dispensing receptacle. Since the apparatus incorporates a vibratory mechanism to convey chips from the hopper to the metering station the chips are not subject to any shearing or cutting action and thus a highly acceptable commercial product is provided to the end user.

CLAIMS

1.    Apparatus for cooking foodstuffs comprising a hopper for storing raw or precooked foodstuffs; metering means constructed and arranged to meter a predetermined quantity of foodstuffs received from said hopper; vibratory conveying means operable to convey foodstuffs from said hopper to said metering means; a cooking medium; and a cooking container displaceable between a first position in which said container receives foodstuffs from said metering means, a second position in which the foodstuffs in said cooking container are placed in said cooking medium; and a third position in which the foodstuffs may be dispensed.

2.    Apparatus as claimed in Claim 1 wherein said metering means is constructed and arranged to meter said foodstuffs by weight.

3.    Apparatus as claimed in Claim 2 wherein said metering means includes a counterbalanced arm, said counterbalanced arm having a receiver on one side of the pivot axis thereof to receive said foodstuffs.

4.    Apparatus as claimed in Claim 3 wherein the wall sections defining said receiver are openable but biassed towards a closed position.

5.    Apparatus as claimed in Claim 4 constructed and arranged so that said receiver is opened as said cooking container moves from said third to said first position.

6.    Apparatus as claimed in any one of the preceding claims wherein said vibratory conveying means includes a sloping ramp sloping downwardly between said hopper and said metering means, and means to impart vibration to said ramp.

7.     Apparatus as claimed in Claim 6 wherein a horizontal ramp section is provided on the lower end of said sloping ramp.

8.     Apparatus as claimed in Claim 6 or Claim 7 wherein said means to impart vibration to said ramp comprises an electromagnet powered by a pulsating D.C. power source.

9.     Apparatus as claimed in any one of Claims 6 to 8 wherein said ramp is supported on springs.

10.     Apparatus as claimed in claim 9 when dependent on claim 8 wherein the frequency of pulsing of said D.C. power source is set to be substantially equal to the natural mechanical frequency of said ramp and springs.

11.     Apparatus as claimed in any one of Claims 8 to 10 wherein the vibration of said ramp is amplitude modulated.

12.     Apparatus as claimed in any one of the preceding claims wherein said cooking container is pivotally mounted but slidable with respect to the pivot axis thereof.

13.     Apparatus as claimed in any one of the preceding claims wherein said first position of said cooking container lies between said second and third positions.

14.     Apparatus as claimed in any one of the preceding claims further including means to remove a cup from a stack of cups; and means to position said cup beneath said cooking container when in said third position so as to receive cooked foodstuffs therefrom.

0084206

CLAIMS

1. Apparatus for cooking foodstuffs comprising a hopper for storing raw or precooked foodstuffs; metering means constructed and arranged to meter a predetermined quantity of foodstuffs received from said hopper; vibratory conveying means operable to ~~convey~~ *remove* foodstuffs from said hopper *and to convey them* to said metering means; a cooking medium; and a cooking container displaceable between a first position in which said container receives foodstuffs from said metering means, a second position in which the foodstuffs in said cooking container are placed in said cooking medium; and a third position in which the foodstuffs may be dispensed.

2. Apparatus as claimed in Claim 1 wherein said metering means is constructed and arranged to meter said foodstuffs by weight.

3. Apparatus as claimed in Claim 2 wherein said metering means includes a counterbalanced arm, said counterbalanced arm having a receiver on one side of the pivot axis thereof to receive said foodstuffs.

4. Apparatus as claimed in Claim 3 wherein the wall sections defining said receiver are openable but biassed towards a closed position.

5. Apparatus as claimed in Claim 4 constructed and arranged so that said receiver is opened as said cooking container moves from said third to said first position.

6. Apparatus as claimed in any one of the preceding claims wherein said vibratory conveying means includes a sloping ramp sloping downwardly between said hopper and said metering means, and means to impart vibration to said ramp.

Fig.1.

Fig.2.

2/6

0084206

Fig.3.

Fig.5.

*Fig.6.*

120

121

122

*Fig.4.*

118

119

115

128

123

129

126

_Fig.7._

110

102

_Fig.8._

104

106 107

108

_Fig.9._

105

102

106

109

107

101

103

101

5/6

100

0084206

_Fig .10._

37

36

33

32

35

_Fig.11._

34

33

32

35

34

**0084206**

European Patent
Office

**EUROPEAN SEARCH REPORT**

Application number

EP 82 30 0269

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 357 341 (KOCKEN et al.)<br><br>* column 4, lines 43-57; figure 10 * | 1,2,6,8 | A 47 J 37/12 |
| Y | US-A-2 108 627 (TYLER)<br>* figures 3,13,14 * | 1,13 | |
| A | NL-A- 294 841 (VAN MEER)<br>* page 14, lines 12-19; claim 2; figure 3 * | 1,2,6 | |
| A | US-A-3 448 677 (DEXTERS)<br><br>* column 3, lines 27-64; column 4, lines 29-52; figures 1,7 * | 1,2,3,4,14 | |
| A | FR-A-2 109 537 (VAN CLEVEN)<br><br>* figures 1,5,6,7; page 6, lines 8-34 * | 1,2,3,4,14 | TECHNICAL FIELDS SEARCHED (Int. Cl. 3)<br><br>A 47 J<br>G 07 F<br>A 23 L |
| A | BE-A- 678 866 (HOEBERIGS)<br>* page 6, lines 1-4; figures 1,4 * | 1,6 | |
| A | US-A-2 134 088 (OBDYKE)<br>* figures 4,5; page 4, left-hand column, lines 36-51 * | 1,5 | |

-/-

The present search report has been drawn up for all claims

| Place of search | Date of completion of the search | Examiner |
|---|---|---|
| THE HAGUE | 17-09-1982 | SCHARTZ J. |

**0084206**

Application number

EUROPEAN SEARCH REPORT

European Patent Office

EP  82 30 0269

Page  2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 818 820  (HARRIS)  <br><br> * column 4, lines 19-33 * <br><br> --- | 1,12, 13 | |
| A | US-A-3 443 509  (SANDY)  <br><br> * column 3, lines 48-51; figure 1 * <br><br> ----- | | |

TECHNICAL FIELDS SEARCHED (Int Cl 3)

The present search report has been drawn up for all claims

| Place of search | Date of completion of the search | Examiner |
|---|---|---|
| THE HAGUE | 17-09-1982 | SCHARTZ J. |

CATEGORY OF CITED DOCUMENTS

X   particularly relevant if taken alone
Y   particularly relevant if combined with another
    document of the same category
A   technological background
O   non-written disclosure
P   intermediate document

T   theory or principle underlying the invention
E   earlier patent document, but published on, or
    after the filing date
D   document cited in the application
L   document cited for other reasons

&   member of the same patent family, corresponding
    document